# EUROPÄISCHE PATENTANMELDUNG

(11) **EP 0 594 165 A1**
(43) Veröffentlichungstag der Anmeldung: **27.04.1994**
(21) Anmeldenummer: 93117046.8
(22) Anmeldetag: 21.10.1993
(51) Int. Cl.: B29B 17/02, C08J 11/20, B03B 9/00, C10G 1/06

(54) **Verfahren zur Wiederverwertung von thermoplastischem Kunststoffabfall sowie Anlage zur Durchführung eines solchen Verfahrens**

(30) Priorität: 22.10.1992 DE 4235553
(71) Anmelder: KUHNE ANLAGENBAU GmbH, D-53757 Sankt Augustin (DE); Deisenroth, Friedrich-Ulf Dipl.-Ing., D-53797 Lohmar (DE)
(72) Erfinder: Kuhne, Peter, Dipl.-Ing., D-53773 Hennef-Stein (DE); Deisenroth, Friedrich-Ulf, D-53797 Lohmar (DE)
(74) Vertreter: von Rohr, Hans Wilhelm, Dipl.-Phys.

(57) **Zusammenfassung**

Ein Verfahren zur Wiederverwertung von thermoplastischem Kunststoffabfall, bei dem das thermoplastische Kunststoffmaterial gereinigt, d. h. von das Verfahren störenden Fremdstoffen weitgehend befreit, und fein zerteilt wird, bei dem dann das feinteilige Kunststoffmaterial in eine hochsiedende Mineralölfraktion eingebracht und innig vermengt wird und bei dem schließlich die Mischung hydriert wird, wird dadurch wirtschaftlich im großtechnischen Maßstab einsetzbar, daß zunächst eine Zerteilung des Kunststoffmaterialserzeugt wird, daß das grobteilige und gereinigte Kunststoffmaterial in eine Extruderstufe eingeführt und in der Extruderstufe mit entsprechend hoher Temperatur plastifiziert und homogenisiert wird, daß das aus der Extruderstufe austretende plastifizierte Kunststoffmaterial gefiltert wird, daß das plastifizierte und gefilterte Kunststoffmaterial nach der Filterstufe zur Vergrößerung seiner Oberfläche vielfach aufgeteilt und so zum feinteiligen Kunststoffmaterial wird und daß das so erzeugte plastifizierte, gefilterte und feinteilige Kunststoffmaterial in die hochsiedende Mineralölfraktion eingebracht wird.

## Beschreibung

Die Erfindung betrifft ein Verfahren zur Wiederverwertung von thermoplastischem Kunststoffabfall mit den Merkmalen des Oberbegriffs von Anspruch 1 sowie eine Anlage zur Durchführung eines solchen Verfahrens mit den Merkmalen des Oberbegriffs von Anspruch 10.

Die Wiederverwertung von thermoplastischem Kunststoffabfall findet seit langem große Beachtung, die Anzahl von Vorschlägen für eine wirtschaftlich sinnvolle Wiederverwertung hält sich aber durchaus in Grenzen. In einer früheren, jedoch nachveröffentlichten Patentanmeldung (EP 92 111 097.9) wird schon ein in der Praxis wirtschaftlich durchführbares Verfahren und eine entsprechende Anlage zur Wiederverwertung von Polyolefin-Kunststoffabfällen direkt zu Kunststoffolien beschrieben.

Das hier vorliegende Verfahren und die hier vorliegende Anlage betrifft eine völlig andere verfahrenstechnische Wiederverwertung, nämlich die Wiederverwertung durch Hochdruck- oder Niederdruckhydrierung (Römpp "Chemie-Lexikon", 9. Aufl., 1990, Bd. 3, Seite 1882 "Hydrierung"). Dieses bekannte Verfahren zur Wiederverwertung von thermoplastischem Kunststoffabfall arbeitet im Prinzip ähnlich wie das Verfahren der Kohlehydrierung (Römpp, aaO, Seite 2292 "Kohleverflüssigung"; Winnacker / Küchler "Chemische Technologie", Bd. 3 "Organische Technologie I", München 1971, Seite 71 ff.). Ähnlich wie in der Sumpfphase der Kohlehydrierung wird bei dem bekannten Verfahren feingemahlener thermoplastischer Kunststoffabfall in einer hochsiedenden Mineralölfraktion dispergiert. Man nennt diesen Verfahrensschritt "Anmaischen". Anschließend wird die erzeugte Dispersion in an sich üblicher Weise hydriert, etwa entsprechend der Gasphase der Kohlehydrierung. Für weitere Informationen zu diesen Verfahrensschritten darf auf die zuvor zitierten Literaturstellen verwiesen werden.

Verschiedene Randbedingungen lassen das bekannte Verfahren zur Wiederverwertung von thermoplastischem Kunststoffabfall so teuer werden, daß eine großtechnische Nutzung nur beschränkt oder gar nicht möglich ist. Zunächst müssen metallische Anteile in dem thermoplastischen Kunststoffmaterial möglichst weitgehend eliminiert werden, da diese in der weiteren Hydrierung zu erheblichen Störungen führen. Dazu muß der Kunststoffabfall zuvor weitestgehend gereinigt und vorsortiert werden. Dies muß dem Zerteilungsvorgang vorausgehen, da dieser zu feiner Zerteilung des Kunststoffmaterials führen muß, um das anschließende Anmaischen zu ermöglichen. Tatsächlich muß der Kunststoffabfall nach der Reinigung zu Korngrößen von unter 2 mm feinstgemahlen werden. Die dazu erforderlichen Mahlsysteme sind außerordentlich teuer, verschleißen schnell und verstopfen vor allen Dingen sehr häufig, so daß sie häufig wieder gereinigt werden müssen. Das bedeutet Stillstand des Verfahrens bzw. der Anlage und Kosten.

Das Anmaischen des feinstgemahlenen Kunststoffabfalls im heißen Vakuumdestillatsrückstand erfolgt in Großbehältern über relativ lange Verweilzeiten. Anders ist eine hinreichend homogene Dispersion nicht zu bekommen. Das aber führt zu Zeitverlust und Kosten und darüber hinaus zu einer störenden Gelbildung. Diese wiederum erschwert und verteuert das nachfolgende Pumpen der Dispersion in der Hydrieranlage. Die gefürchtete Gelbildung beim Anmaischen bedingt auch, daß der Anteil des Kunststoffabfalls im Vakuumdestillatsrückstand auf sechs bis sieben Prozent begrenzt sein muß, was Wirtschaftlichkeit des Verfahrens und der Anlage weiter begrenzt.

Der Erfindung liegt die Aufgabe zugrunde, ein Verfahren und eine Anlage der eingangs angesprochenen Art anzugeben, bei dem bzw. bei der eine wirtschaftliche, großtechnisch einsetzbare Wiederverwertung von thermoplastischem Kunststoffabfall gewährleistet ist.

Das erfindungsgemäße Verfahren ist durch die Merkmale des kennzeichnenden Teils von Patentanspruch 1 beschrieben, vorteilhafte Ausgestaltungen und terbildungen des erfindungsgemäßen Verfahrens sind Gegenstand der Patentansprüche 2 bis 9.

Merkmale der erfindungsgemäßen Anlage sind Gegenstand des Patentanspruchs 10, vorteilhafte Ausgestaltungen und Weiterbildungen der erfindungsgemäßen Anlage sind Gegenstand der Patentansprüche 11 bis 18.

Wesentlich für das erfindungsgemäße Verfahren ist, daß auf das Feinstmahlen und das Anmaischen des Kunststoffabfalls jedenfalls in der bisherigen Form verzichtet werden kann. Der Kunststoffabfall wird vielmehr durch Plastifizierung in einer Extrusionsanlage in einen Aggregatzustand gebracht, der ein direktes inniges Vermengen mit der Mineralölfraktion erlaubt. Damit wird das erfindungsgemäße Verfahren großtechnisch anwendbar, da es eine Vielzahl von Problemen des bisher bekannten Verfahrens vermeidet. Von besonderer Bedeutung ist, daß die Sortierung und kostenaufwendige Feinstmahlung des Kunststoffabfalls entfällt und daß Lagerhaltung und Transport vereinfacht sind. Das Ausgangsmaterial kann nämlich direkt am Verwendungsort grob zerteilt und gereinigt werden. Bei etwa gleicher Energiebilanz wie das eingangs erläuterte, bekannte Verfahren ist die Erzeugung eines Kunststoffmaterials in einem für die innige Vermengung mit der hochsiedenden Mineralölfraktion (Vakuumdestillatsrückstand) geeigneten Aggregatzustand erfindungsgemäß wesentlich kostengünstiger und mit sehr geringen Stillstandszeiten behaftet. Da auf das langfristige Anmaischen in Großbehältern mit langen Verweilzeiten verzichtet werden kann und in der Mischstufe nur eine geringe Verweilzeit vorliegt, in der eine Gelbildung praktisch nicht erfolgt, kann der Anteil an Kunststoff in der hochsiedenden Mineralölfraktion im übrigen stark erhöht werden, beispielsweise auf über 20 %.

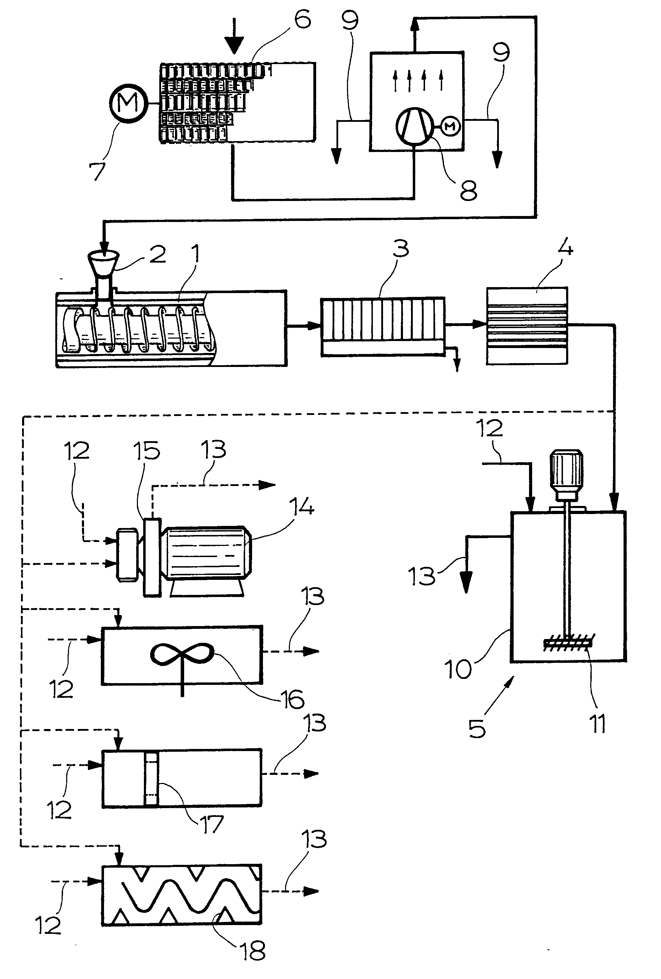

Im folgenden wird die Erfindung anhand einer lediglich ein Ausführungsbeispiel darstellenden Zeichnung näher erläutert. Die einzige Figur der Zeichnung zeigt eine Anlage gemäß der Erfindung, an der gleichzeitig der Verfahrensablauf mitbeschrieben werden kann. Dabei sind für bestimmte Anlagenteile Alternativen angezeigt.

Die in der einzigen Figur der Zeichnung dargestellte Anlage zur Durchführung eines Verfahrens zur Wiederverwertung von thermoplastischem Kunststoffabfall, bei dem das thermoplastische Kunststoffmaterial gereinigt, d. h. von das Verfahren störenden Fremdstoffen weitgehend befreit, und fein zerteilt wird, bei dem dann das feinteilige Kunststoffmaterial in eine hochsiedende Mineralölfraktion eingebracht und innig vermengt wird und bei dem schließlich die Mischung hydriert wird, zeigt zunächst eine grobteilig vorzerkleinertes, gereinigtes Kunststoffmaterial aufnehmende Extruderstufe, die nach bevorzugter Lehre mit einem Schneckenextruder 1 und mit einem vorgeschalteten Stopfwerk 2 ausgerüstet ist. Der Extruderstufe ist eine Filterstufe 3 nachgeordnet. Der Filterstufe 3 ist eine Aufteilungsstufe 4 nachgeordnet und dieser schließlich ist eine Mischstufe 5 nachgeordnet. Woher die den Schneckenextruder 1 aufweisende Extruderstufe das grobteilig vorzerkleinerte Kunststoffmaterial erhält, ist im Grundsatz offen. Nach bevorzugter Lehre ist dazu allerdings Teil der Anlage eine Grobteilungsstufe, die nach bevorzugter Lehre in Form einer Shredderanlage 6 ausgeführt ist. Diese wird von einem Motor 7 angetrieben. Dieser Grobteilungsstufe mit Shredderanlage 6 und Motor 7 ist eine Reinigungsstufe nachgeordnet, die im dargestellten Ausführungsbeispiel und nach bevorzugter Lehre in Form einer Windsichteranlage 8 mit Eisenextraktoren 9 ausgeführt ist. Grundsätzlich könnten diese Anlagenteile auch getrennt von den anderen Anlagenteilen angeordnet sein oder Teil einer anderen, im vorliegenden Zusammenhang nicht interessierenden Anlage sein.

Verfahrenstechnisch läuft die Sache nun so ab, daß zunächst eine Zerteilung des Kunststoffabfalls in größere Teile erfolgt und so ein grobteiliges Kunststoffmaterial erzeugt wird, daß das grobteilige und gereinigte Kunststoffmaterial in die Extruderstufe eingeführt und in der Extruderstufe mit entsprechend hoher Temperatur plastifiziert und homogenisiert wird, daß das aus der Extruderstufe austretende plastifizierte Kunststoffmaterial gefiltert wird, daß das plastifizierte und gefilterte Kunststoffmaterial nach der Filterstufe zur Vergrößerung seiner Oberfläche vielfach aufgeteilt und so zum feinteiligen Kunststoffmaterial wird und daß das so erzeugte plastifizierte, gefilterte und feinteilige Kunststoffmaterial in die hochsiedende Mineralölfraktion eingebracht wird.

Die Anlagenbeschreibung hat schon deutlich gemacht, daß bei dem erfindungsgemäßen Verfahren die Reinigung nach der Zerteilung in grobteiliges Kunststoffmaterial erfolgt. Das Kunststoffmaterial, das meist in unterschiedlichen Fraktionen mit unterschiedlichen Größen der Teilstücke vorliegt, wird also zunächst in handelsüblicher Ballenform der an sich bekannten Shredderanlage 6 zugeführt. Wegen der Robustheit einer solchen Shredderanlage 6 brauchen in diesem Zustand die verbliebenen Metallreste noch nicht extrahiert zu werden. Allenfalls ist das Ausgangsmaterial ganz grob gereinigt, also beispielsweise von anhaftendem Grobschmutz, Steinen usw. befreit.

In der Shredderanlage 6 kann das Kunststoffmaterial dann in größere Teile zerkleinert werden, beispielsweise mit Abmessungen von ca. 10 bis 15 mm. Jetzt ist das Kunststoffmaterial hinreichend vorbereitet, um in einer Trennstufe, nämlich der erläuterten Reinigungsstufe mit Windsichteranlage 8 und Eisenextraktoren 9 ernsthaft gereinigt, nämlich von das Verfahren störenden Fremdstoffen weitgehend befreit zu werden. Mittels Eisenextraktoren 9, die durch Pfeile angedeutet sind und mit üblichen Magnetsystemen arbeiten, werden Eisen-Bestandteile aus dem Ausgangsmaterial extrahiert. Außerdem werden entsprechend der Gebläseeinstellung der Windsichteranlage 8 nur Teile mit passendem spezifischem Gewicht nach oben geblasen, während Teile mit höherem spezifischem Gewicht über seitlich angeordnete Abzugseinrichtungen eliminiert werden können. Ob diese dann dem Prozeß nochmals oder in anderer Weise zugeführt werden, kann dahinstehen.

Nunmehr ist das Kunststoffmaterial grobteilig und gereinigt und kann in die Extruderstufe eingeführt werden. Im Grundsatz kommen für die Extruderstufe verschiedene Extrudertypen in Frage. Aus dem ganz eingangs erläuterten, ein anderes Anwendungsgebiet betreffenden Stand der Technik ist ein für eine Plastifizierung und Homogenisierung von Kunststoffabfällen besonders geeigneter Schneckenextruder 1 bekannt, der im vorliegenden Fall ebenfalls in ähnlicher Form einsetzbar ist. Es handelt sich hier um einen Schneckenextruder 1 mit vorgeschaltetem Stopfwerk 2, hier angedeutet als Stopftrichter. Die Extruderstufe verläßt dann ein plastifiziertes Kunststoffmaterial als Massestrang, das natürlich trotz vorheriger Reinigung noch eine Vielzahl von Verunreinigungen, ggf. auch nur in Form noch nicht plastifizierter Reststücke enthält. Das aus der Extruderstufe austretende plastifizierte Kunststoffmaterial wird also nochmals gefiltert, in der schon angesprochenen Filterstufe 3. Die Filterung erfolgt im dargestellten Ausführungsbeispiel mittels mehrerer Lamellenfilter, die Feststoffe wie metallische Bestandteile oder mineralische Verschmutzungen auszusondern vermögen. Grundsätzlich würde bei relativ sauberem Kunststoffmaterial ein Lamellenfilter ausreichen, im dargestellten Ausführungsbeispiel sind aber mehrere Lamellenfilter in verschiedenen Stufen hintereinander angeordnet. Auch ein handelsüblicher Siebfilter kann noch zusätzlich eingesetzt werden, wenn das die Randbedingungen erfordern.

Eingangs ist ausgeführt worden, daß das bekannte Verfahren eine Feinzerteilung des Kunststoffmaterials erfordert. Diese erfolgt nun erfindungsgemäß am plastifizierten Kunststoffmaterial (Materialstrang), der nämlich nach der Filterstufe vielfach aufgeteilt wird. Das so erzeugte plastifizierte feinteilige Kunststoffmaterial erst wird in die hochsiedene Mineralölfraktion eingebracht. Das dargestellte Ausführungsbeispiel zeigt eine besonders bevorzugte Ausführungsform der Ausführung der Aufteilungsstufe 4. Die vielfache Aufteilung gelingt nämlich hier mittels einer den Strang des plastifizierten Kunststoffmaterials in eine Vielzahl von Einzelsträngen oder Einzel-Tropfenfolgen aufteilenden Lochplatte (Spaghettidüse). Dadurch werden aus dem homogenen, plastifizierten Materialstrang eine Vielzahl von Kleinststrängen mit größtmöglichen Oberflächen gepreßt. Wenn diese Kleinststränge abreißen, ergeben sich statt kontinuierlicher Einzelstränge eben Einzel-Tropfenfolgen. Jedenfalls gelingt so eine feinste Aufteilung mit sehr großer Oberfläche für das Kunststoffmaterial, - genau das, was für die nun anschließende innige Vermengung mit der hochsiedenden Mineralölfraktion erforderlich ist.

Bevor die Vermengung erfolgt, kann je nach Randbedingung die nun aufgeteilte Kunststoffmasse noch entgast werden. Entgasungstechniken, die für diesen Fall geeignet sind, lassen sich dem eingangs erläuterten, nicht vorveröffentlichten Stand der Technik auf einem anderen Anwendungsgebiet entnehmen. Eine Gasbildung ergibt hauptsächlich Restfeuchtigkeit, Druckfarben, Reste organischer Bestandteile.

Hinsichtlich der Filterstufe 3 gilt im übrigen, daß diese auch noch mit einem Zwischenfilter für grobe Verunreinigungen versehen sein könnte, den man vorzugsweise als Lochring oder Lochscheibe mit einer messerartig umlaufenden Abstreifkante ausführen könnte (siehe gleichfalls den zuvor angesprochenen, nicht vorveröffentlichten Stand der Technik).

Für die Mischstufe 5 gelten nun verschiedene Alternativen, die in einer Auswahl in der einzigen Figur der Zeichnung dargestellt sind. Die Mischstufe 5 bedarf deswegen besonderer Beachtung, weil darin zwei Komponenten stark unterschiedlicher Viskosität miteinander innig vermengt und vermischt werden müssen, und zwar innerhalb möglichst kurzfristiger Verweilzeiten, um eine Gelbildung zu vermeiden.

Das in der einzigen Figur dargestellte Ausführungsbeispiel zeigt zunächst als eine Alternative für die Mischstufe 5 einen Mischkessel 10 mit einem stark scherenden Rührwerk 11. Durch den einkommenden Pfeil 12 ist in allen Alternativen die Zuführung der hochsiedenden Mineralölfraktion ( z. B. Vakuumdestillatsrückstand) angedeutet, durch den abgehenden Pfeil 13 ist jeweils angedeutet, wo die Mischung dann der eigentlichen Hydrieranlage zugeführt wird.

Im Mischkessel 10 werden durch das Rührwerk 11 die erforderlichen stark turbulenten Mischzustände erzeugt, so daß die Einzelstränge des plastifizierten Kunststoffmaterials in der Mineralölfraktion in feinster Form verteilt werden. Die dadurch entstehende Dispersion wird dann in bekannter Weise der Hydrierung zugeführt.

Für stark scherende Rührwerke 11 gibt es im Stand der Technik verschiedene Alternativen, beispielsweise eine Zahnscheibe, einen Impeller-Rührer oder einen Pulper.

Als erste Alternative zeigt die links mit gestrichelten Pfeilen angeschlossene Darstellung für die Mischstufe 5 eine Kreiselpumpe 14 oder Zahnradpumpe, bei der die Komponenten einem gemeinsamen Ansaugbereich 15 zugeführt werden.

Die drei weiteren Alternativen zeichnen sich jeweils dadurch aus, daß hier im Durchlauf gemischt wird (On-line-Zuführung). Hier erkennt man zunächst einen mechanischen Rührer 16, alternativ dazu eine Ultraschall-Dispersionseinrichtung 17 und, wiederum alternativ einen statischen Mischer 18 mit stark scherendem Stator. Es gibt auch noch andere Alternativen, die die Anforderungen an die Mischstufe 5, die zuvor erläutert worden sind, erfüllen.

Insgesamt ergeben sich mit dem erfindungsgemäßen Verfahren und der erfindungsgemäßen Vorrichtung die zuvor am Ende des allgemeinen Teils der Beschreibung erläuterten Vorzüge, die hier einen großtechnischen Einsatz in wirtschaftlicher Weise erwarten lassen.

## Patentansprüche

1. Verfahren zur Wiederverwertung von thermoplastischem Kunststoffabfall, bei dem das thermoplastische Kunststoffmaterial gereinigt, d. h. von das Verfahren störenden Fremdstoffen weitgehend befreit, und fein zerteilt wird, bei dem dann das feinteilige Kunststoffmaterial in eine hochsiedende Mineralölfraktion eingebracht und innig vermengt wird und bei dem schließlich die Mischung hydriert wird, **dadurch gekennzeichnet,** daß zunächst eine Zerteilung des Kunststoffabfalls in größere Teile erfolgt und so ein grobteiliges Kunststoffmaterial erzeugt wird, daß das grobteilige und gereinigte Kunststoffmaterial in eine Extruderstufe eingeführt und in der Extruderstufe mit entsprechend hoher Temperatur plastifiziert und homogenisiert wird, daß das aus der Extruderstufe austretende plastifizierte Kunststoffmaterial gefiltert wird, daß das plastifizierte und gefilterte Kunststoffmaterial nach der Filterstufe zur Vergrößerung seiner Oberfläche vielfach aufgeteilt und so zum feinteiligen Kunststoffmaterial wird und daß das so erzeugte plastifizierte, gefilterte und feinteilige Kunststoffmaterial in die hochsiedende Mineralölfraktion eingebracht wird.

2. Verfahren nach Anspruch 1, dadurch gekennzeichnet, daß die Zerteilung in das grobteilige Kunststoffmaterial mittels einer Shredderanlage erfolgt.

3. Verfahren nach einem der Ansprüche 1 oder 2, dadurch gekennzeichnet, daß die Reinigung nach der Zerteilung in grobteiliges Kunststoffmaterial erfolgt.

4. Verfahren nach Anspruch 3, dadurch gekennzeichnet, daß die Reinigung des grobteiligen Kunststoffmaterials mittels einer Windsichteranlage mit Eisenextraktoren erfolgt.

5. Verfahren nach einem der Ansprüche 1 bis 4, dadurch gekennzeichnet, daß die Plastifizierung und Homogenisierung in der Extruderstufe mittels eines Schneckenextruders, vorzugsweise mit vorgeschaltetem Stopfwerk und/oder mit sich in Extrusionsrichtung verringerndem Förderquerschnitt, erfolgt.

6. Verfahren nach einem der Ansprüche 1 bis 5, dadurch gekennzeichnet, daß die Filterung des plastifizierten Kunststoffmaterials mit einem oder mehreren Lamellenfiltern und/oder Siebfiltern erfolgt.

7. Verfahren nach einem der Ansprüche 1 bis 6, dadurch gekennzeichnet, daß die vielfache Aufteilung mittels einer den Strang des plastifizierten Kunststoffmaterials in eine Vielzahl von Einzelsträngen oder Einzel-Tropfenfolgen aufteilenden, insbesondere pressenden Aufteilungsstufe erfolgt.

8. Verfahren nach einem der Ansprüche 1 bis 7, dadurch gekennzeichnet, daß nach der vielfachen Aufteilung des Kunststoffmaterials eine Entgasung des Kunststoffmaterials erfolgt.

9. Verfahren nach einem der Ansprüche 1 bis 8, dadurch gekennzeichnet, daß die Einbringung des feinteiligen Kunststoffmaterials in die Mineralölfraktion in einer stark turbulente Mischzustände erzeugenden Mischstufe erfolgt.

10. Anlage zur Durchführung eines Verfahrens zur Wiederverwertung von thermoplastischem Kunststoffabfall, bei dem das thermoplastische Kunststoffmaterial gereinigt, d. h. von das Verfahren störenden Fremdstoffen weitgehend befreit, und fein zerteilt wird, bei dem dann das feinteilige Kunststoffmaterial in eine hochsiedende Mineralölfraktion eingebracht und innig vermengt wird und bei dem schließlich die Mischung hydriert wird, **gekennzeichnet durch** eine grobteilig vorzerkleinertes und gereinigtes Kunststoffmaterial aufnehmende Extruderstufe, vorzugsweise mit einem Schneckenextruder (1) und ggf. mit einem vorgeschalteten Stopfwerk (2), eine der Extruderstufe nachgeordnete Filterstufe (3), in der weitere, das Verfahren störende Fremdstoffe ausgefiltert werden, eine der Filterstufe (3) nachgeordnete Aufteilungsstufe (4), in der das plastifizierte und gefilterte Kunststoffmaterial zur Vergrößerung seiner Oberfläche vielfach aufteilbar ist und so zum feinteiligen Kunststoffmaterial wird, und eine hochturbulente Mischzustände erzeugende Mischstufe (5), in der die Einbringung des plastifizierten, nunmehr feinteiligen Kunststoffmaterials in die Mineralölfraktion erfolgt.

11. Anlage nach Anspruch 10, dadurch gekennzeichnet, daß der Extruderstufe eine Grobteilungsstufe, vorzugsweise in Form einer Shredderanlage (6), sowie eine der Grobteilungsstufe nachgeordnete Reinigungsstufe, vorzugsweise in Form einer Windsichteranlage (8) mit Eisenextraktoren (9) vorgeordnet ist.

12. Anlage nach einem der Ansprüche 10 oder 11, dadurch gekennzeichnet, daß die Filterstufe (3) einen oder mehrere Lamellenfilter und/oder einen oder mehrere Siebfilter aufweist.

13. Anlage nach einem der Ansprüche 10 bis 12, dadurch gekennzeichnet, daß die Filterstufe (3) mit einem Zwischenfilter für grobe Verunreinigungen versehen und der Zwischenfilter vorzugsweise als Lochring oder Lochscheibe mit einer messerartig umlaufenden Abstreifkante, die über den Lochring bzw. Lochscheibe schabt, versehen ist.

14. Anlage nach einem der Ansprüche 10 bis 13, dadurch gekennzeichnet, daß die Mischstufe (5) als Mischkessel (10) mit einem stark scherenden Rührwerk (11) ausgebildet ist.

15. Anlage nach einem der Ansprüche 10 bis 13, dadurch gekennzeichnet, daß die Mischstufe (5) als Kreiselpumpe (14) (oder Zahnradpumpe) mit gemeinsamem Ansaugbereich (15) ausgeführt ist.

16. Anlage nach einem der Ansprüche 10 bis 13, dadurch gekennzeichnet, daß die Mischstufe (5) als On-line-Mischer mit einem mechanischen Rührer (16) ausgeführt ist.

17. Anlage nach einem der Ansprüche 10 bis 13, dadurch gekennzeichnet, daß die Mischstufe (5) als On-line-Mischer mit einer Ultraschall-Dispersionseinrichtung (17) ausgeführt ist.

18. Anlage nach einem der Ansprüche 10 bis 13, dadurch gekennzeichnet, daß die Mischstufe (5) als On-line-Mischer mit einem statischen Mischer (18) mit einem stark scherenden Stator ausgeführt ist.
